# EUROPEAN PATENT APPLICATION

(11) **EP 4 642 039 A1**
(43) Date of publication of application: **29.10.2025**
(21) Application number: 23907512.0
(22) Date of filing: 05.12.2023
(51) Int. Cl.: H04N 23/55, H04N 23/54, H04N 23/57, G03B 17/12, G03B 30/00, F16F 1/36

(54) **CAMERA MODULE**

(30) Priority: 19.12.2022 KR 20220178794
(71) Applicant: LG INNOTEK CO. LTD, Gangseo-gu Seoul 07796 (KR)
(72) Inventor: HAN, Sang Yeon, Seoul 07796 (KR)
(74) Representative: DREISS Patentanwälte PartG mbB
(86) International application number: PCT/KR2023/019929
(87) International publication number: WO 2024/136226

(57) **Abstract**

A camera module according to one embodiment of the present invention comprises: a substrate; an image sensor disposed on the substrate; a plate disposed on the substrate; a base disposed on the plate; a lens barrel disposed on the base; a filter disposed on the plate; a first adhesive member disposed between the plate and the base; a second adhesive member disposed between the filter and the plate; a third adhesive member disposed on the edge of the filter, wherein the third adhesive member is disposed to encompass the upper surface and the outer side of the edge of the filter.

## Description

### [Technical Field]

The present invention relates to a camera module.

### [Background Art]

Since it is difficult to apply the voice coil motor (VCM) technology used in existing conventional camera modules to ultra-small camera modules consuming low-power, research in this regard has been actively conducted.

In the case of a camera module being mounted on small electronic devices such as smartphones, the camera module may frequently receive impacts during use, and may shake slightly due to the user's handshaking or the like during photographing. In view of such a point, technologies to additionally install hand-shake prevention means in camera modules are being developed recently.

### [Detailed Description of the Invention]

### [Technical Subject]

The technical problem to be solved by the present invention is to provide a miniaturized camera module.

### [Technical Solution]

In order to solve the above described technical problem, a camera module according to one embodiment of the present invention comprises: a substrate; an image sensor being disposed on the substrate; a plate being disposed on the substrate; a base being disposed on the plate; a lens barrel being disposed on the base; a filter being disposed on the plate; a first adhesive member being disposed between the plate and the base; a second adhesive member being disposed between the filter and the plate; a third adhesive member being disposed on the edge of the filter, wherein the third adhesive member is being disposed to encompass an upper surface and an outer side surface of the edge of the filter.

The third adhesive member can overlap the filter and the second adhesive member in an optical axis direction.

The third adhesive member is disposed to encompass an outer side surface of the second adhesive member, and the filter can be disposed between the second adhesive member and the third adhesive member.

The shrinkage rate of the second adhesive member may be smaller than the shrinkage rate of the third adhesive member.

The filter includes a hole, and a hole adhesive member can be disposed in the hole of the filter.

The plate includes an opening through which the image sensor passes, a first area in which the first adhesive member is disposed, and a second area in which the second adhesive member is disposed, wherein the first area and the second area can be disposed to be spaced apart from each other.

The plate may include a third region connecting the first area and the second area, wherein the opening may be formed to be larger than the image sensor.

The first area of the plate is formed to correspond to a lower surface of the base, and the second area of the plate may be formed to correspond to an edge of the filter.

The base includes an opening through which the lens barrel passes and an accommodating portion for accommodating the filter therein, wherein the filter can be disposed to be spaced apart inside the accommodating portion of the base.

In order to solve the above technical problem, a camera module according to an embodiment of the present invention comprises: a substrate; an image sensor being disposed on the substrate; a plate being disposed on the substrate; a lens driving device including a base being disposed on the plate, a housing being disposed on the base, and a bobbin being disposed inside the housing and movable in an optical axis direction; a lens barrel being disposed inside the bobbin; and a filter being disposed on the plate, wherein the plate includes a first area corresponding to a lower surface of the base and a second area corresponding to an edge of the filter, and wherein the filter is fixed to the plate by two adhesive members having different shrinkage rates.

The two adhesive members having different shrinkage rates include a second adhesive member being disposed between the filter and the plate and a third adhesive member being disposed at an edge of the filter, wherein the shrinkage rate of the second adhesive member may be smaller than the shrinkage rate of the third adhesive member.

The second adhesive member, the third adhesive member, and the filter can be overlapped with one another in an optical axis direction.

The filter includes a hole not being overlapped with the lens barrel in an optical axis direction, wherein a hole adhesive member can be disposed in the hole of the filter.

### [Advantageous Effects]

According to the present embodiments, the gap between an image sensor and a lens barrel can be reduced through a mold-less structure, so that a high CRA image sensor can be applied and the overall size of a camera module can be miniaturized.

In addition, by fixing the filter using two types of adhesives with different shrinkage rates, bending and damage to the filter can be prevented.

In addition, the gas being generated during an adhesive curing process can be discharged through a hole in a filter.

In addition, by arranging a reinforcing member on a substrate, bending of the substrate can be prevented even if impact occurs due to the operation of a lens barrel.

In addition, by arranging a damper member in a region where a lens barrel comes into contact when moving a lens barrel, impacts can be absorbed, preventing breakage of a filter and damage to a lens, thereby preventing a decrease in resolution.

In addition, by applying a cross air vent design to a damper member, a phenomenon in which a lens and a lens barrel are sticking to the damper member made of silicone material is prevented, and the attachment and detachment can be facilitated.

### [Brief Description of Drawings]

FIG. 1 is an exploded view of a camera module according to the present embodiment.
FIG. 2 is a perspective view of the camera module of FIG. 1.
FIG. 3a is an exploded view of a lens driving device according to one embodiment.
FIG. 3b is an exploded view of a lens driving device according to another embodiment.
FIG. 3c is an exploded view of a lens driving device according to yet another embodiment.
FIG. 3d is an exploded view of a lens driving device according to still yet another embodiment.
FIG. 4a is a cross-sectional view of an area where an image sensor and a filter are disposed according to the present embodiment.
FIG. 4b is a cross-sectional view of an area where an image sensor and a filter are disposed according to another embodiment of the present invention.
FIG. 5 is a drawing for explaining the disposement of a filter and a lens barrel according to the present embodiment.
FIG. 6 is a drawing illustrating a plate according to another embodiment of the present invention.
FIG. 7 is a drawing illustrating a plate according to yet another embodiment of the present invention.
FIG. 8 is a perspective view of a portable terminal according to the present embodiment.
FIG. 9 is a configuration diagram of the portable terminal illustrated in FIG. 8.

### [BEST MODE]

Hereinafter, preferred embodiments of the present invention will be described in detail with reference to the accompanying drawings.

However, the technical idea of the present invention is not limited to some embodiments to be described, but may be implemented in various forms, and within the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention. In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used.

These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

Hereinafter, a camera module according to an embodiment and an optical device including the same will be described as follows with reference to the attached drawings. For convenience of explanation, the camera module according to the embodiment will be described using a Cartesian coordinate system (x, y, z), but may be described using another coordinate system, and the embodiment is not limited thereto. In each drawing, an x-axis and a y-axis represent directions perpendicular to a z-axis, which is an optical axis (OA) direction, and a z-axis direction, which is the optical axis (OA) direction, may be referred to as a 'first direction', an x-axis direction may be referred to as a 'second direction', and a y-axis direction may be referred to as a 'third direction'.

The handshake correction function' applied to a camera module of a mobile device such as a smartphone or tablet PC may be a function that moves the lens in a direction perpendicular to the optical axis direction or tilts the lens with respect to the optical axis to offset vibration (or movement) caused by the user's hand shaking.

In addition, an 'auto focusing function' may be a function that automatically focuses on a subject by moving a lens in an optical axis direction according to a distance to the subject to obtain a clear image of the subject on an image sensor.

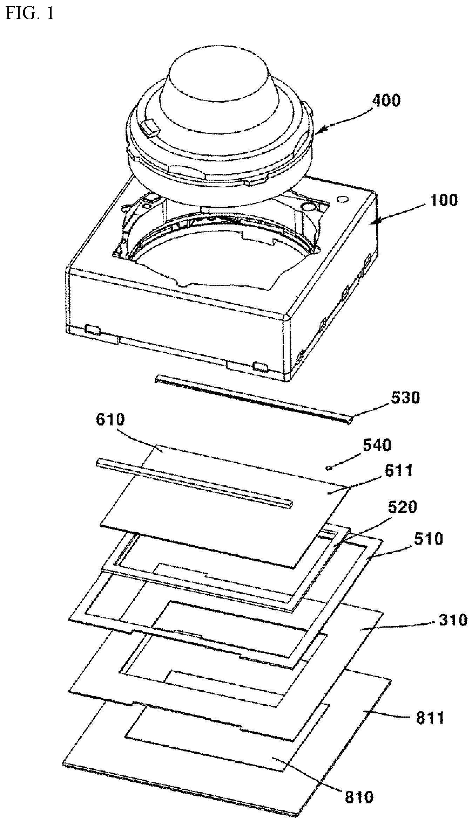

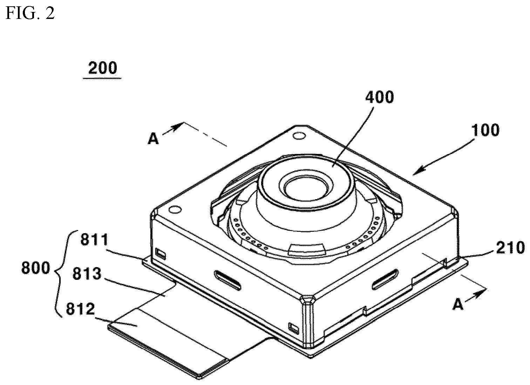

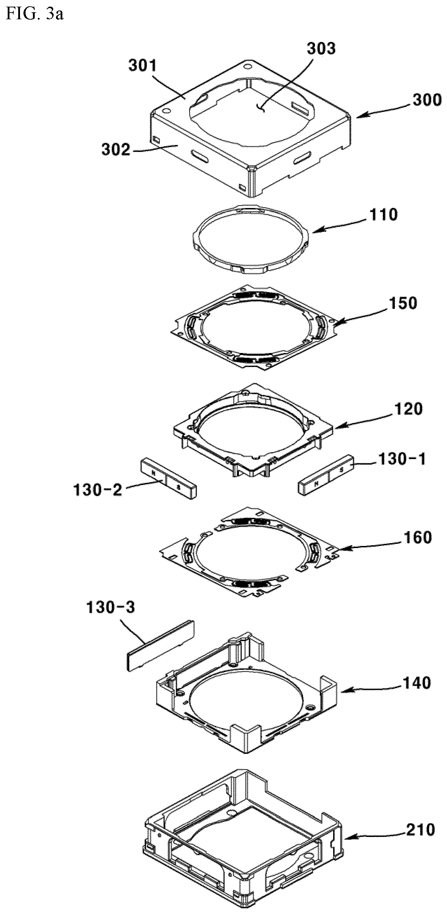

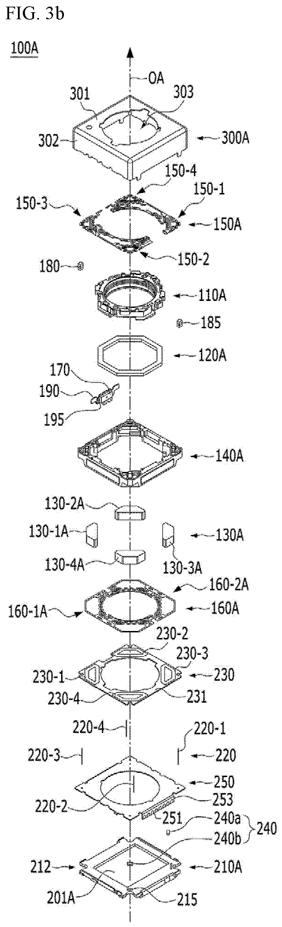

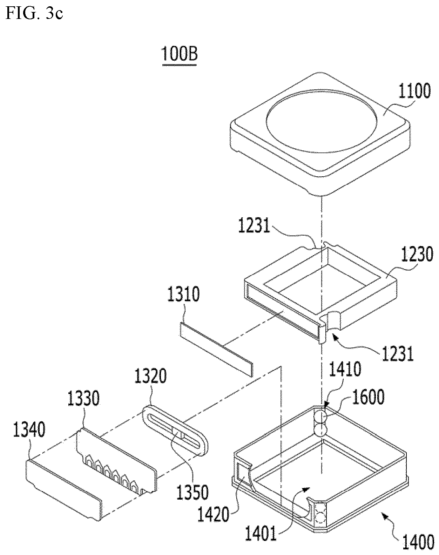

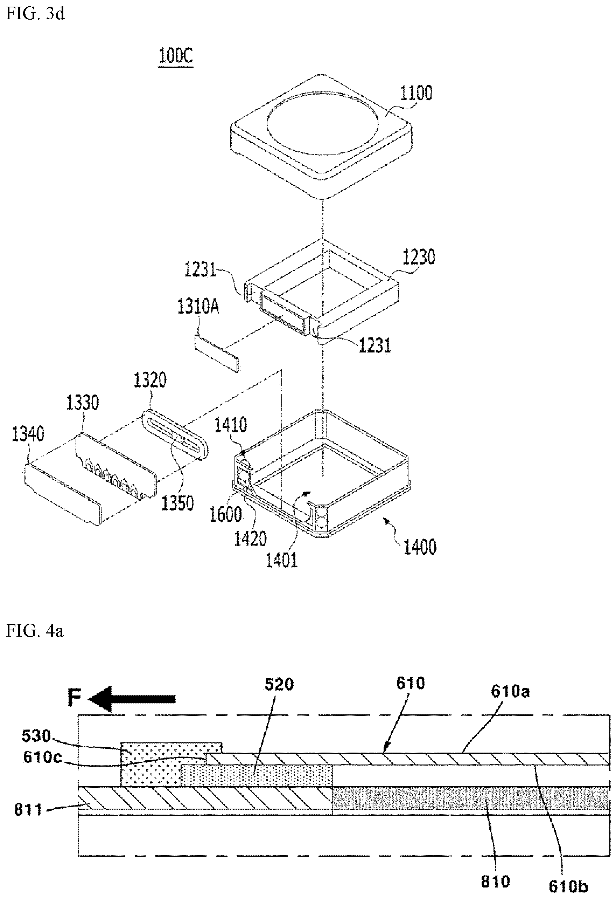

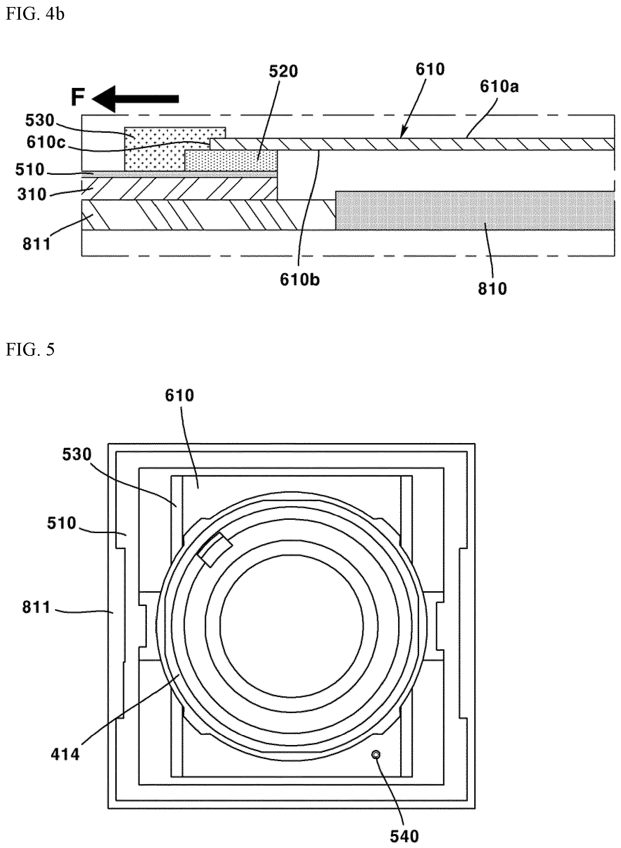

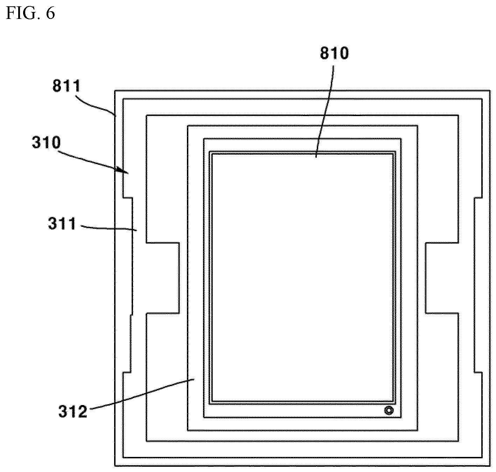

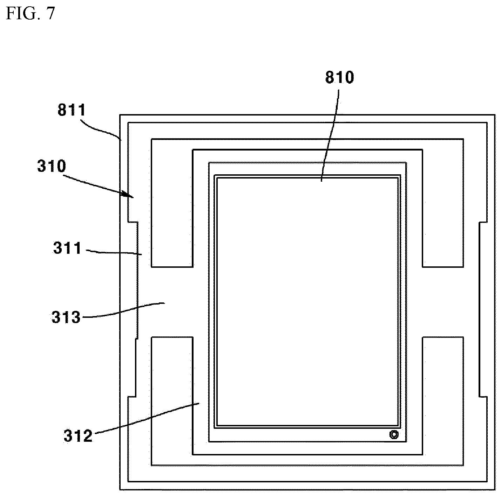

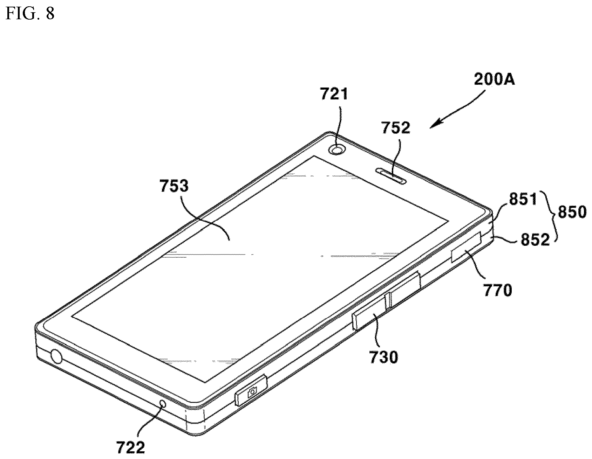

FIG. 1 is an exploded view of a camera module according to the present embodiment; FIG. 2 is a perspective view of the camera module of FIG. 1; FIG. 3a is an exploded view of a lens driving device according to one embodiment; FIG. 3b is an exploded view of a lens driving device according to another embodiment; FIG. 3c is an exploded view of a lens driving device according to yet another embodiment; FIG. 3d is an exploded view of a lens driving device according to still yet another embodiment; FIG. 4a is a cross-sectional view of an area where an image sensor and a filter are disposed according to the present embodiment; FIG. 4b is a cross-sectional view of an area where an image sensor and a filter are disposed according to another embodiment of the present invention; FIG. 5 is a drawing for explaining the disposement of a filter and a lens barrel according to the present embodiment; FIG. 6 is a drawing illustrating a plate according to another embodiment of the present invention; FIG. 7 is a drawing illustrating a plate according to yet another embodiment of the present invention; and FIG. 8 is a perspective view of a portable terminal according to the present embodiment.

The camera module **200** may include a lens module **400,** a lens driving device **100, a** filter **610,** a holder **310,** a circuit board **800,** and an image sensor **810.**

The camera module **200** can photograph at least one of an image and a video. The camera module **200** may be a camera assembly. The camera module **200** may be a camera unit. The camera module **200** may include a lens driving device **100.** The lens driving device **100** may drive the lens module **400** and move the lens module **400** in an optical axis direction. The lens module **400** may be referred to as a "lens," "lens unit," or "lens assembly." The lens module **400** is coupled with the lens driving device **100** and may include at least one of a lens unit or a lens barrel.

The camera module **200** may include a sensor driving device. The camera module **200** may include a voice coil motor (VCM). The camera module **200** may include an auto focus assembly. The camera module **200** may include a handshake correction assembly. The camera module **200** may include an auto focus device. The camera module **200** may include a handshake correction device. The camera module **200** may include an actuator. The camera module **200** may include a lens driving actuator. The camera module **200** may include a sensor driving actuator. The camera module **200** may include an auto focus actuator. The camera module **200** may include a handshake correction actuator.

The camera module **200** may include a circuit board **800.** The circuit board **800** may be a main board. The circuit board **800** may be a printed circuit board (PCB). The circuit board **800** may be connected to a power source of the optical device. The circuit board **800** may include a connector being connected to a power source of an optical device. The circuit board **800** may have circuit elements 95 (or electronic elements) being disposed thereon. An adhesive member may be included for coupling or attaching the lens driving device **100** and the circuit board **810.**

The camera module **200** may include a base **210.** The base **210** may be disposed in the circuit board **800.** The base **210** may be disposed on the circuit board **800.** The base **210** may be disposed above the circuit board **800.** The base **210** may be fixed to the circuit board **800.** The base **210** may be coupled to the circuit board **800.** The base **210** may be attached to the circuit board **800** by an adhesive member **612.**

The camera module **200** may include an image sensor **810.** The image sensor **810** may be disposed in the circuit board **800.** The image sensor **810** may be disposed between the circuit board **800** and the base **210.** The image sensor **810** may be electrically connected to the circuit board **800.** The image sensor **810** may be disposed below the lens module **16.**

Light passing through the lens module **400** and the filter **610** may be incident on the image sensor **810** to form an image. The image sensor **810** may include an effective image area. The image sensor **810** may convert light irradiated to the effective image area into an electrical signal. The image sensor **810** may include at least one of a charge-coupled device (CCD), a metal oxide semiconductor (MOS), a CPD, and a CID.

The camera module **200** may include a filter **610.** The filter **610** may be disposed between the lens module **400** and the image sensor **810.** The filter **610** may be disposed in the holder **310.** The filter **610** may be disposed in the window **318** of the holder **310.** The filter **610** may block light of a specific frequency band from being incident on the image sensor **810.** The filter **610** may include an infrared cut-off filter (IRCF). The filter **610** may block infrared rays from being incident on the image sensor **810.**

The lens driving device **100** illustrated in FIG. 3A is a lens driving device for AF, but embodiments are not limited thereto. In another embodiment, the lens driving device may be a lens driving device for OIS. Here, the meanings of "for AF" and "for OIS" may be the same as those described in the camera module for AF and the camera module for OIS.

Also, in FIG. 3a, the bobbin and the housing are supported by an elastic member, but are not limited thereto, and in other embodiments, they may be supported by a ball or a ball bearing.

Referring to FIG. 3a, a lens driving device **100** may comprise a housing **140,** a bobbin **120** for mounting the lens module **400,** a coil **110** being mounted in the bobbin **120,** a magnet **130** being disposed inside the housing **140** and facing the coil **110,** at least one upper elastic member **150** being coupled to an upper portion of the bobbin **120** and an upper portion of the housing **140,** at least one lower elastic member **160** being coupled to a lower portion of the bobbin **120** and a lower portion of the housing **140,** and a base **210.** In another embodiment, the coil is disposed in the housing, and the magnet may be disposed in the bobbin.

The lens driving device **100** may further include a cover member **300** being coupled to the base **210** and for providing a space for accommodating components of the lens driving device **100** together with the base **210.** The cover member **300** may be a 'cover can' or a 'shield can'. The cover member may be formed of a metal material. The cover member **300** may block electromagnetic interference (EMI). The cover member **300** may be electrically connected to the circuit board **800.** The cover member **300** may be grounded to the circuit board **800.** The cover member **300** may include an upper plate **301,** a side plate **302** being connected to the upper plate **301,** and an opening **303** being formed in the upper plate **301.**

The base **210** is disposed below the bobbin **120** (or the housing **140).** The housing **140** may be disposed on the base **210.** The base **210** may be coupled to the housing **140.** In another embodiment, the base **210** and the housing **140** may be integrally configured, and such a configuration may be defined as a "base" or a "housing".

The base **210** may have an opening **201** corresponding to the opening of the bobbin **120** and/or the opening of the housing **140,** and may have a shape that matches or corresponds to the cover member **300,** for example, a square shape. The opening **201** of the base **210** may have a shape of a through hole penetrating the base **210** in an optical axis direction. A pillar portion being protruded toward the housing **140** may be formed on an upper surface of the base **210.**

The base **210** may include a pillar portion protruded upwardly from a corner or each of the corners by a predetermined height. For example, the base **210** may include four pillar portions being disposed at four corners. In another embodiment, the pillar portion may be omitted. The pillar portion of the base **210** may be inserted into, fastened to, or coupled to a groove formed at a lower portion of the corner of the housing **140** by an adhesive material such as an epoxy or a silicone.

The coil **110** may be connected to at least one of the upper elastic member **150** and the lower elastic member **160.** The lower elastic member **160** may include two lower elastic members and lower springs. The coil **110** may be connected to two lower elastic members.

The upper elastic member **150** may include a first inner frame (or a first inner side portion) being coupled to the bobbin **120,** a first outer frame (or a first outer side portion) being coupled to the housing **140,** and a first connection unit connecting the first inner frame and the first outer frame. The lower elastic member may include a second inner frame (or a second inner side portion) being coupled to the bobbin **120, a** second outer frame (or a second outer side portion) being coupled to the housing **140,** and a second connection unit connecting the second inner frame and the second outer frame. One end of the coil **110** may be connected to the second inner frame of the first lower elastic member, and the other end of the coil **110** may be connected to the second inner frame of the second lower elastic member.

The first lower elastic member may include a first terminal, and the second lower elastic member may include a second terminal. The driving signal of the coil **110** may be inputted from the outside through the first and second terminals of the first and second lower elastic members.

The first terminal may be bent from a second outer frame of the first lower elastic member to an outer side surface (or "first outer side surface") of the base **210.** The second terminal may be bent from a second outer frame of the second lower elastic member to an outer side surface (or "first outer side surface") of the base **210.** At least a portion of each of the first and second terminals may be extended to an outer side surface of the holder **310** and may be electrically connected to the circuit board **800.**

The circuit board **800** may provide a driving signal to the coil **110** through the first and second terminals of the first and second lower elastic members, and may include pads (or terminals) being electrically connected to the first and second terminals through a solder or the like.

In other embodiments, the terminal may not be formed integrally with a lower elastic member, but may be disposed separately in the base **210,** and a terminal and an outer frame of the lower elastic member may be coupled and electrically connected by a solder or the like.

The coil **110** may be disposed on an outer side surface of the bobbin **120.** For example, the coil **110** may be wound in a ring shape on an outer side surface of the bobbin **120,** but is not limited thereto. A driving signal may be provided to the coil **110.** The driving signal may be in the form of a current or a voltage, and may include at least one of a direct current signal or an alternating current signal.

The magnet **130** may be disposed at a side portion of the housing **140.** In another embodiment, the magnet may be disposed at a corner or a corner of the housing. The magnet **130** may include a plurality of magnets **130-1** to **130-3,** and the magnet **130** disposed at the housing **140** may correspond to, face, or overlap the coil **110** in a direction perpendicular to the optical axis **OA**.

The moving part may be moved in an optical axis direction by the interaction between the magnet **130** and the coil **110** provided with the driving signal. By controlling the displacement of the bobbin **120** in an optical axis direction by the driving signal being provided to the coil **110,** AF driving may be implemented.

The moving part may include a bobbin **120** and a configuration coupled thereto. For example, the moving part may include a bobbin **120** and a coil **110.** Also, for example, the moving part may further include a lens module **400.**

For AF feedback driving, the lens driving device **100** of the camera module **200** may further include a sensing magnet (not shown) being disposed in the bobbin, and an AF position sensor (for example, a hall sensor, not shown) being disposed on the housing, the base, or the cover member and corresponding to, facing, or being overlapped with the sensing magnet. The lens driving device **100** may further include an AF circuit board being disposed in the housing **140** and on which the AF position sensor is mounted. In this case, the circuit board may be electrically connected to the coil **110** and the AF position sensor, and a driving signal may be provided to each of the coil **110** and the AF position sensor through the circuit board.

When the AF position sensor is implemented using only a Hall sensor, a driving signal may be provided from the outside to the circuit board, and the driving signal may be provided to the coil **110** through the circuit board and two elastic members connected to the circuit board.

When the AF position sensor is a driver IC including a Hall sensor, a driving signal may be provided from the AF position sensor to the circuit board, and the driving signal may be provided to the coil **110** through two elastic members connected to the circuit board.

The AF position sensor can output an output signal according to the result of detecting the strength of the magnetic field of the sensing magnet due to the movement of the bobbin **120,** and the output of the AF position sensor can be transmitted to a circuit board and outputted to the outside through the circuit board.

In another embodiment, the AF position sensor may be disposed in the bobbin and the sensing magnet may be disposed in the housing. In addition, the lens driving device **100** may further include a balancing magnet being disposed in the bobbin **120** and disposed at an opposite side of the sensing magnet.

A camera module according to another embodiment may be coupled with a lens module **400** instead of the lens driving device **100** of FIG. 1, and may include a housing for fixing the lens module **400,** and the housing may be coupled or attached to an upper surface of the circuit board **800.**

The housing attached or fixed to an upper surface of the circuit board **800** does not move, and the position of the housing and the lens module coupled to the housing may be fixed while attached to the circuit board **800.**

The lens driving device **100A** illustrated in FIG. 3b may be a lens driving device for OIS.

Referring to FIG. 3B, a lens driving device **100A** may include a housing **140A,** a bobbin **120A** being disposed inside the housing **140A** for mounting the lens module **400,** a first coil **110A** being disposed in the bobbin **120A,** a magnet **130A** being disposed in the housing **140A** and facing the first coil **110A,** at least one upper elastic member **150A** being coupled to a lower portion of the bobbin **120A** and a lower portion of the housing **140A,** at least one lower elastic member **160A** coupled to a lower portion of the bobbin **120A** and a lower portion of the housing **140A,** a second coil **230** disposed below the housing **140A,** a circuit board **250** being disposed below the second coil **230,** and a base **210** being disposed below the circuit board **250.**

The lens driving device **100A** may include a support member **220** connecting the upper elastic member **150A** and the circuit board **250.** The lens driving device **100A** may include a sensing magnet **180** being disposed in the bobbin **120A** and a first position sensor **170** being disposed in the housing **140.** The lens driving device **100A** may include a balancing magnet **185** being disposed in the bobbin **120A.**

The description of the bobbin **110,** the coil **120,** the magnet **130,** the housing **140,** the AF position sensor, the sensing magnet, and the balancing magnet of FIG. 3a may be applied to the embodiment of FIG. 3b.

The lens driving device **100A** may include the circuit board **190** being disposed in the housing **140A,** and the circuit board **190** may be disposed in one side portion of the housing **140A.** The first position sensor **170** may be disposed in the circuit board **190** and may be electrically connected to the circuit board **190.** In addition, the description of the AF position sensor and the circuit board of FIG. 3a may be applied to the embodiment of FIG. 3b.

In addition, the lens driving device may further include a capacitor **195** being disposed in the circuit board **190.** The capacitor **195** may be connected in parallel to two input terminals of the first position sensor **170** for providing a power or a driving signal, or two terminals of the circuit board **190** being electrically connected to two input terminals of the first position sensor **170.** The capacitor **195** may protect the first position sensor **170** from noise or ESD of a high frequency component introduced from the outside.

The upper elastic member **150A** may include a plurality of upper elastic members **150-1** to **150-4.** A plurality of elastic members may be electrically connected to the circuit board **190.** For example, the four upper elastic members **150-1** to **150-4** may be coupled and electrically connected to corresponding one of the first to fourth terminals of the circuit board **190.**

The first position sensor **170** may be implemented as a Hall sensor alone or may be in the form of a driver IC including a Hall sensor. The first position sensor **170** may include four terminals, and the four terminals of the first position sensor may be electrically connected to the first to fourth terminals of the circuit board **190.**

The magnet **130A** may include a plurality of magnets **130-1A** to **130-4A** disposed at corners of the housing **140A,** but is not limited thereto, and in other embodiments, the magnet may be disposed at a side portion of the housing **140A** as shown in FIG. 3a.

The supporting member **220** may include a plurality of supporting members **220-1** to **220-4.** The supporting members **220-1** to **220-4** may be disposed in corners or corners of the housing **140A.** A corner of the housing **140** may be formed in a groove or a hole for avoiding spatial interference with the supporting member **220,** and the supporting member **200** may pass through the groove or the hole.

One end of each of a plurality of support members **220-1** to **220-4** may be coupled to and electrically connected to a corresponding one of a plurality of upper elastic members **150-1** to **150-4.** One end of each of a plurality of support members **220-1** to **220-4** may be coupled to and electrically connected to the circuit board **250** or the circuit member **231.**

The circuit board **190** may be electrically connected to the circuit board **250** by a plurality of upper elastic members **150-1** to **150-4** and support members **220-1** to **220-4,** and thus the first position sensor **170** may be electrically connected to the circuit board **250.**

The lower elastic member **160** may include two lower elastic members **160-1A** and **160-2A,** and may be electrically connected to the first coil **110A.** The first **coil 110A** may be electrically connected to the circuit board **250** or the first position sensor **170.** A driving signal may be supplied or transmitted to the first coil **120** from the first position sensor **170** or the circuit board **250.**

The second coil **230** may be aligned under the bobbin **120A** and/or the housing **140A.** For example, the second coil **230** may be aligned below the magnet **130A.** The second coil **230** may include coil units **230-1** to **230-4** facing the magnets **130-1A** to **130-4A** and being overlapped with the housing **140A** in an optical axis direction.

For example, the second coil **230** may include a circuit member **231** aligned on the circuit board **250** and a plurality of coil units **230-1** to **230-4** formed in the circuit member **231.** Here, the circuit member **231** may be expressed as a "substrate," a "circuit board," a "coil board" or the like. In another embodiment, the circuit member **231** may be omitted from the second coil **230** and may include coil units **230-1** to **230-4.** The second coil **230** may be electrically connected to the circuit board **250** and may receive a power source or a driving signal from the circuit board **250.**

By the interaction between the magnets **130-1A** to **130-4A** and the second coils **230-1** to **230-4** provided with the driving signal, the housing **140A** may move in a second direction and/or a third direction, for example, in an X-axis direction and/or a Y-axis direction, thereby performing handshake correction.

The circuit board **250** is aligned on an upper surface of the base **210A,** and may include an opening corresponding to the opening of the bobbin **120A,** the opening of the housing **140A,** or/and the opening **201A** of the base **210.** The opening of the circuit board **250** may be a through hole or a hollow.

The circuit board **250** may include a body being disposed to a top surface of the base **210A** and having an opening, and at least one terminal surface **253** being bent from the body to an outer side surface of the base **210A.** A plurality of terminals **251** for receiving electrical signals from the outside or transmitting electrical signals to the outside may be formed in the terminal surface **253** of the circuit board **250.** A plurality of terminals **251** of the circuit board **250** may be electrically connected to at least one of the first coil **120,** the first position sensor **170,** the circuit board **190,** the second position sensor **240,** and the second coil **230.**

The base **210A** may include an opening **201A.** The description of the base **210** in the embodiment of FIG. 3a may be applied to FIG. 3b. In another embodiment, the base **210A** and the housing **140A** may be integrally formed, and such a configuration may be defined as a "base" or a "housing". To avoid spatial interference with the support member **220,** a cover part **212** having a groove, a concave groove, or a hole shape may be formed at a corner of the base **210A.**

The lens driving apparatus **100A** may further include a second position sensor **240** being electrically connected to the circuit board **250.** The second position sensor **240** may include two sensors **240a** and **240b,** and may be electrically connected to the circuit board **250.** Each of the two sensors **240a** and **240b** may be implemented by a position detection sensor such as a Hall sensor or the like, or may be implemented in the form of a driver including a Hall sensor. The base **210A** may include a groove **215** for accommodating the sensors **240a** and **240b.**

Each of the sensors **240a** and **240b** may detect the strength of magnetic fields of the magnets **130-1A** to **130-4A** due to the movement of the housing **140** in a direction perpendicular to the optical axis, and output an output signal according to a detected result. Displacement in a direction perpendicular to the optical axis of the housing **140A** may be detected by using output signals of each of the sensors **240a** and **240b,** and the control units **830** and **780** may perform OIS feedback handshake correction by using output signals of the sensors **240a** and **240b.**

The lens driving device **100B** illustrated in FIG. 3c may be a ball-type lens driving device.

Referring to FIG. 3c, the lens driving device **100B** may comprise a housing **1400,** a bobbin **1230** being disposed inside the housing **1400** and coupled with the lens module **400,** a coil **1320** being disposed inside the housing **1400** and a magnet **1310** being disposed in the bobbin **1230,** a ball **1600** being disposed between the housing **1400** and the bobbin **1230,** and a yoke **1340** being disposed in the housing **1400.** The ball **1600** may also be expressed as a "ball member" or a "ball bearing".

The lens driving device **100B** may include a cover member **1100** coupled with the housing **1400** to encompass an outer side surface of the housing **1400.** The lens driving device **100B** may include a position sensor **1350** being disposed in the housing **1400.** In addition, the lens driving device **100B** may include a circuit board **1330** being disposed in the housing **1400,** and the position sensor **1350** may be mounted on the circuit board **1330** and may be electrically connected to the circuit board **1330.** The description of the position sensor of FIGS. 3a and 3b may be applied to the position sensor **1350** of FIG. 3c.

The bobbin **1230** may have an opening for being coupled with a lens module; and the opening of the bobbin **1230** may be in the form of a through hole penetrating the bobbin in an optical axis direction. The magnet **1310** may be disposed on an outer side surface of the bobbin **1230.** A groove may be formed on an outer side surface of the bobbin **1230** for arranging the magnet **1310.**

The coil **1320** may be disposed on any one side portion **1420** of the housing **1400** facing the magnet **1310.** For example, a groove may be formed on any one side portion of the housing **1400** for arranging the magnet **1310.** In another embodiment, the magnet may be disposed in the housing and the coil may be disposed in the bobbin.

The housing **1400** may have an opening **1401** corresponding to the lens module **400,** and the opening **1401** of the housing **140** may be in the form of a through hole penetrating the housing **1400** in an optical axis direction.

The coil **1320** can be electrically connected to the circuit board **1330.**

The ball **1600** can support the bobbin **1230** for moving relative against the housing **1400.** At least a portion of the ball **1600** can be in contact with at least a portion of the housing **1400** and at least a portion of the bobbin **1230,** thereby reducing friction between the housing **1400** and the bobbin **1230.**

The yoke **1340** may be disposed on one side portion of the housing **1400** and may face the magnet **1310** in a direction perpendicular to the optical axis. For example, the yoke **1340** may be disposed at an outside of the circuit board **1330,** and a coil **1320** may be disposed between the yoke **1340** and the magnet **1310.**

The yoke **1340** may be made of a material capable of generating an attractive force between it and the magnet **1310,** such as a magnet or metal, and accordingly, an attractive force may act between the yoke **1340** and the magnet **1310** in a direction perpendicular to the optical axis. By this attractive force, the ball **1600** can maintain the contact with the bobbin **1230** and the housing **1400.**

The housing **1400** may be formed with a first accommodating groove **1410** for accommodating at least a portion of the ball **1600** or for arranging at least a portion of the ball **1600.** The bobbin **1230** may be formed with a second accommodating groove **1231** for accommodating at least another portion of the ball **1600** or for arranging at least another portion of the ball **1600.**

The first accommodating groove **1410** may be formed at an inner side or inner surface of at least one corner of the housing **1400,** and the second accommodating groove **1231** may be formed at an outer side or outer surface of at least one corner of the bobbin **1230.** The first accommodating groove **1410** and the second accommodating groove **1231** may face or oppose each other, and the ball **1600** may be disposed between the first accommodating groove **1410** and the second accommodating groove **1231** and may come into contact with each of the first accommodating groove **1410** and the second accommodating groove **1231.** The number of balls **1600** being disposed between the first accommodating groove **1410** and the second accommodating groove **1231** may be one or more.

In FIG. 3c, a first accommodating groove may be formed at each of two corners of the housing **1400** being disposed to face or oppose each other, and a second accommodating groove may be formed at each of two corners of the bobbin **1230** corresponding to the two corners of the housing **140.**

In another embodiment, a first accommodating groove may be formed at each of the four corners of the housing **1400,** and a second accommodating groove may be formed at each of the four corners of the bobbin **1230** corresponding to the four corners of the housing **140.**

In another embodiment, a first accommodating groove may be formed at each of two corners of the housing **1400** adjacent to the side portion **1420** of the housing **1400** in which the coil **1320** and/or the circuit board **1330** are disposed.

Additionally, a second accommodating groove may be formed at each of two corners of the bobbin **1230** corresponding to two corners of the two housings **1400** adjacent to the side portion **1420** of the housing **1400.**

In another embodiment, a first accommodating groove may be formed at each of two corners adjacent to a side portion positioned at an opposite side portion **1420** of the housing **1400.** A second accommodating groove may be formed at each of two corners of the bobbin **1230** corresponding to the two corners adjacent to a side portion positioned at an opposite side portion **1420** of the housing **1400.**

As shown in FIG. 3c, the housing **1400** may be implemented as a single body, but is not limited thereto. In another embodiment, the housing **1400** may include a housing and a base being coupled to the housing, as in FIG. 3a and FIG. 3b. At this time, the base may have an opening that is the same as or similar to the opening **1401** of the housing **1400.**

For the convenience of the following description, the base **210** of the lens driving device **100** is described as an example, but is not limited thereto. The following description can also be applied or analogically applied to the base **210A** of the lens driving device **100A** and the housing **1400** of the lens driving device **100B.**

FIG. 3d may be a lens driving device **100C** that is a modified embodiment of FIG. 3c.

In FIG. 3d, the ball **1600** can be disposed between two corners adjacent to the side portion **1420** of the housing **1400** in which the coil **1320** and/or the circuit board **1330** are disposed and the corresponding outer side surface of the bobbin **1230.**

For example, in FIG. 3d, the first accommodating groove **1410** may be formed at each of two corners of the housing **1400** adjacent to the side portion **1420** of the housing **1400** where the coil **1320** and/or the circuit board **1330** are disposed, and the second accommodating groove **1231** may be formed at corners of the bobbin **1230** corresponding to the two corners of the housing **1400.**

The magnet **1310A** can be disposed between balls **1600** accommodated in second accommodating grooves **1231** formed at two corners of the bobbin **1230.** For example, the magnet **1310A** can be disposed between two second accommodating grooves **1231** formed at two corners of the bobbin **1230.**

FIG. 4a is a cross-sectional view of an area where an image sensor and a filter are disposed according to the present embodiment; FIG. 4b is a cross-sectional view of an area where an image sensor and a filter are disposed according to another embodiment of the present invention; FIG. 5 is a drawing for explaining the disposement of a filter and a lens barrel according to the present embodiment; FIG. 6 is a drawing illustrating a plate according to another embodiment of the present invention; and FIG. 7 is a drawing illustrating a plate according to yet another embodiment of the present invention.

According to the embodiment of the present invention illustrated in FIG. 4a, the filter **610** may be disposed on the substrate **811.** The second adhesive member **520** may be disposed between the filter **610** and the substrate **811.** The second adhesive member **520** may fix the filter **610** on the substrate **811.** The second adhesive member **520** may be disposed at the edge of the opening of the substrate **811.** The second adhesive member **520** may be disposed corresponding to the edge of the filter **610.** The second adhesive member **520** may be disposed on a lower surface **610b** of the filter **610.**

A filter **610** may be disposed on a second adhesive member **520** and a third adhesive member **530** may be disposed at an edge of the filter **610.** The third adhesive member **530** may be disposed at the edge of the filter **610.** The third adhesive member **530** may be disposed to encompass an upper surface and an outer side surface of the edge of the filter **610.** The third adhesive member **530** may be disposed at two opposite surfaces of the edge of the filter **610.** The third adhesive member **530** may be disposed at four surfaces of the edge of the filter **610.** The third adhesive member **530** may be disposed to encompass an outer side surface of the second adhesive member **520.** The second adhesive member **520** and the third adhesive member **530** may be disposed to form a step.

The filter **610** may include an upper surface **610a,** a lower surface **610b** being disposed at an opposite side of the upper surface **610a,** and a side surface **610c** connecting the upper surface **610a** and the lower surface **610b.** The upper surface **610a,** the lower surface **610b,** and the side surface **610c** of the filter **610** may be in contact with an adhesive member. A portion of the upper surface **610a,** a portion of the lower surface **610b,** and a portion of the side surface **610c** of the filter **610** may be in contact with the adhesive member. The lower surface **610b** of the filter **610** may be in contact with the second adhesive member **520.** The upper surface **610a** of the filter **610** may be in contact with the third adhesive member **530.** The side surface **610c** of the filter **610** can be in contact with at least one of the second adhesive member **520** and the third adhesive member **530.** The third adhesive member **530** can be in contact with the upper surface **610a** and the side surface **610c** of the filter **610** and the upper surface and the side surface of the second adhesive member **520.**

The second adhesive member **520** and the third adhesive member **530** may be an epoxy being cured by UV. The second adhesive member **520** and the third adhesive member **530** may have different shrinkage rates. The shrinkage rate of the second adhesive member **520** may be lower than the shrinkage rate of the third adhesive member **530.** For example, the shrinkage rate of the second adhesive member **520** may be about 2% to 3%, and the shrinkage rate of the third adhesive member **530** may be 5 to 10% or more.

In order to fix the filter **610** to the substrate **811,** a second adhesive member **520** is first applied to the substrate **811,** and then the filter **610** is placed. Thereafter, a third adhesive member **530** is secondarily applied to the edge of the filter **610** and cured. Since the third adhesive member **530** has a larger shrinkage rate than the second adhesive member **520,** the third adhesive member **530** can provide tension **F** to the filter **610.** Since shrinkage occurs during the curing process of the third adhesive member **530,** tension **F** that pulls the filter **610** is generated, so that wave occurrence in the filter **610** can be minimized. The second adhesive member **520** can serve to support the filter **610,** and the third adhesive member **530** can serve to prevent bending by generating tension in the filter **610.** The second adhesive member **520** and the third adhesive member **530** can serve to fix the filter **610** in two stages.

A portion of the third adhesive member **530** being disposed in the filter **610** may be overlapped with a lens barrel in an optical axis direction. A portion of the third adhesive member **530** may face a lower surface of the lens barrel. In order to prevent the lens barrel and the filter **610** from coming into contact when the lens barrel moves in an optical axis direction, the third adhesive member **530** may be disposed higher than the filter **610.** When the lens barrel moves in an optical axis direction, the lens barrel may first come into contact with the third adhesive member **530** than the filter **610.**

Referring to FIG. 4b, the plate **310** may be disposed on an upper surface of the substrate **811.** The base **210** may be disposed on an upper surface of the plate **310.** The plate **310** may be disposed at an inner side of the base **210.** A first adhesive member **510** may be disposed between the plate **310** and the base **210.** The first adhesive member **510** may fix the base **210** on the plate **310.** The first adhesive member **510** may be applied on the plate **310** corresponding to a lower surface of the base **210.**

The plate **310** may include an opening through which the image sensor **810** passes. The opening of the plate **310** may be formed to be larger than the image sensor **810.** The plate **310** may include an opening and may be formed to have a size corresponding to the substrate **811.** The plate **310** may be formed of a reinforcing member. The plate **310** may be formed of a material having a strong force that resists external force. For example, the plate **310** may be formed of a metal frame made of a metal for example, stainless steel, aluminum, copper, or the like.

The filter **610** according to the present embodiment described below has a structure being disposed by an adhesive without a separate support structure, so the area supporting the filter **610** is reduced, which may make it vulnerable to impact. As an image sensor with an increasing chief ray angle (CRA) is applied, the FBL length of the lens is becoming shorter. Accordingly, warping of the substrate may occur due to an impact caused by movement of the lens barrel in an optical axis or movement of the camera module, and the filter may warp more due to the warping of the substrate. Accordingly, a problem of contact between the filter and the image sensor may occur, so it is necessary to minimize the warping of the substrate. By arranging a plate **310,** which is a reinforcing member, on the substrate **811** according to the present embodiment, the warping of the substrate **811** can be minimized.

Another embodiment, the plate **310** illustrated in FIG. 6, may include an opening through which an image sensor **810** passes, a first area **311** in which a first adhesive member **510** is disposed, and a second area **312** in which a second adhesive member **520** is disposed. A base **210** may be disposed on the first area **311.** The first area **311** may be formed corresponding to an edge of the substrate **811.** The first area **311** may be formed corresponding to a lower surface of the base **210.** A filter **610** may be disposed on the second area **312.** The second area **312** may be formed corresponding to an edge of the opening. The second area **312** may be formed corresponding to an edge of the opening in which the image sensor **810** is disposed.

The first area **311** and the second area **312** may be formed as one region that is connected to each other. The first area **311** and the second area **312** may be formed to be spaced apart from each other. When the first area **311** and the second area **312** are formed to be spaced apart from each other, a hole may be formed in the plate **310** between the first area **311** and the second area **312** in addition to the opening. By forming the hole in the plate **310,** the warping of the substrate can be minimized while reducing the overall weight of the camera module. When the first area **311** and the second area **312** are spaced apart from each other, an impact occurring in each region may not affect the other region.

Yet another embodiment, the plate **310** illustrated in FIG. 7, may comprise an opening through which an image sensor **810** passes, a first area **311** in which a first adhesive member **510** is disposed, a second area **312** in which a second adhesive member **520** is disposed, and a third region **313** connecting the first area **311** and the second area **312.** The shapes of the first area **311,** the second area **312,** and the third region **313** may be variously modified. In the case of including a third region **313** connecting the first area **311** and the second area **312,** an impact occurring in each region is transferred to another region and buffered, so that the amount of impact in each region can be reduced.

The lens driving device **100** illustrated in FIG. 3a and the bases **210** and **210A** of the lens driving device **100A** illustrated in FIG. 3b may be disposed in the substrate **811.** At this time, the filter **610** may be fixed on the substrate **811** by an adhesive member. The filter **610** may be fixed on the plate **310** by an adhesive member. The filter **610** may be disposed in the bases **210** and **210A.** A structure in which the filter **610** is fixed only by an adhesive member without a separate support structure may be referred to as a mold-less structure. The lens driving device **100B** illustrated in FIG. 3c and the housing **1400** of the lens driving device **100C** illustrated in FIG. 3d may be disposed in the substrate **811.** At this time, the filter **610** may be fixed on the substrate **811** by an adhesive member. Although the base is not shown in FIGS. 3c and 3d, a base may be additionally disposed between the housing **1400** and the substrate **811.** In this case, the filter **610** may be disposed inside the opening of the base.

The bases **210** and **210A** may include an accommodating portion that accommodates a filter **610** therein. The filter **610** may be disposed spaced apart within the accommodating portion of the bases **210** and **210A.** The accommodating portion of the bases **210** and **210A** may mean a space in which the filter **610** is disposed. The inner side of the bases **210** and **210A** may face the outer side surface of the filter **610.**

The bases **210** and **210A** may include an opening through which a lens barrel passes. The lens barrel may pass through the opening of the bases **210** and **210A** depending on movement in an optical axis direction. When the lens barrel moves closest to the image sensor **810,** it may pass through the opening of the bases **210** and **210A,** and when the lens barrel moves farthest from the image sensor **810,** it may not pass through the opening of the bases **210** and **210A.**

According to another embodiment of the present invention illustrated in FIG. 4b, the filter **610** may be disposed in the plate **310.** The second adhesive member **520** may be disposed between the filter **610** and the plate **310.** The second adhesive member **520** may fix the filter **610** on the plate **310.** The second adhesive member **520** may be disposed at the edge of the opening of the plate **310.** The second adhesive member **520** may be disposed corresponding to the edge of the filter **610.** The second adhesive member **520** may be disposed on a lower surface of the filter **610.**

A filter **610** may be disposed on a second adhesive member **520** and a third adhesive member **530** may be disposed at an edge of the filter **610.** The third adhesive member **530** may be disposed at the edge of the filter **610.** The third adhesive member **530** may be disposed to encompass an upper surface and an outer side surface of the edge of the filter **610.** The third adhesive member **530** may be disposed at two opposite surfaces of the edge of the filter **610.** The third adhesive member **530** may be disposed at four surfaces of the edge of the filter **610.** The third adhesive member **530** may be disposed to encompass an outer side surface of the second adhesive member **520.** The second adhesive member **520** and the third adhesive member **530** may be disposed to form a step.

The filter **610** may include an upper surface **610a,** a lower surface **610b** being disposed at an opposite side of the upper surface **610a,** and a side surface connecting the upper surface **610a** and the lower surface **610b.** The upper surface **610a,** the lower surface **610b,** and the side surface **610c** of the filter **610** may be in contact with an adhesive member. A portion of the upper surface **610a,** a portion of the lower surface **610b,** and a portion of the side surface **610c** of the filter **610** may be in contact with an adhesive member. The lower surface **610b** of the filter **610** may be in contact with the second adhesive member **520.** The upper surface **610a** of the filter **610** may be in contact with the third adhesive member **530.** The side surface **610c** of the filter **610** can be in contact with at least one of the second adhesive member **520** and the third adhesive member **530.** The third adhesive member **530** can be in contact with the upper surface **610a** and the side surface **610c** of the filter **610** and the side surface of the second adhesive member **520.**

The second adhesive member **520** and the third adhesive member **530** may be an epoxy being cured by UV. The second adhesive member **520** and the third adhesive member **530** may have different shrinkage rates. The shrinkage rate of the second adhesive member **520** may be lower than the shrinkage rate of the third adhesive member **530.** For example, the shrinkage rate of the second adhesive member **520** may be about 2% to 3%, and the shrinkage rate of the third adhesive member **530** may be 5 to 10% or more.

In order to fix the filter **610** to the plate **310,** a second adhesive member **520** is first applied to the plate **310,** and then the filter **610** is disposed, and then a third adhesive member **530** is secondarily applied to the edge of the filter **610** and cured. Since the third adhesive member **530** has a larger shrinkage rate than the second adhesive member **520,** the third adhesive member **530** can provide tension **F** to the filter **610.** Since shrinkage occurs during the curing process of the third adhesive member **530,** tension **F** that pulls the filter **610** is generated, so that wave occurrence in the filter **610** can be minimized. The second adhesive member **520** can serve to support the filter **610,** and the third adhesive member **530** can serve to prevent bending by generating tension in the filter **610.** The second adhesive member **520** and the third adhesive member **530** can serve to fix the filter **610** in two stages.

A portion of the third adhesive member **530** being disposed in the filter **610** may be overlapped with the lens barrel in an optical axis direction. A portion of the third adhesive member **530** may face a lower surface of the lens barrel. In order to prevent the lens barrel and the filter **610** from coming into contact when the lens barrel moves in an optical axis direction, the third adhesive member **530** may be disposed to be higher than the filter **610.** When the lens barrel moves in an optical axis direction, the lens barrel may first come into contact with the third adhesive member **530** than the filter **610.**

A damper member (not shown) may be disposed in an area facing a lower surface of the lens barrel in the third adhesive member **530.** The damper member may be formed by additionally applying epoxy after the third adhesive member **530** is cured. The damper member may be inserted into the third adhesive member **530** and cured together before the third adhesive member **530** is applied and cured. In this case, the damper member may be formed of a silicone material.

As the lens barrel moves adjacent to the image sensor **810,** the damper member may be in contact with a lower surface of the lens barrel to absorb and buffer impact. The damper member may be disposed to be overlapped with the lens barrel in an optical axis direction. The damper member may be disposed to be overlapped with a lower surface of the lens barrel in an optical axis direction. The damper member may be disposed to be in contact with a lower surface of the lens barrel as the lens barrel moves in an optical axis direction within the opening of the bases **210** and **210A.**

An upper surface of the damper member may be formed with a groove. The groove of the damper member **315** may be formed in a cross (+) shape on an upper surface. The groove of the damper member may facilitate attachment and detachment when in contact with a lower surface of the lens barrel. The groove of the damper member may serve to partition the upper surface of the damper member so that the damper member is easily attached and detached while securing an area in contact with a lower surface of the lens barrel. The groove of the damper member may be formed in various shapes, such as a circular shape or a star shape being recessed at the center of an upper surface.

The filter **610** may include a hole **611.** The hole **611** of the filter **610** may be formed in an edge region. The hole **611** of the filter **610** may be formed in a region not being overlapped with the lens barrel in an optical axis direction. The hole **611** of the filter **610** may serve as a vent hole for discharging gas being generated during the curing process of the second adhesive member **520** and the third adhesive member **530.** When the curing of the second adhesive member **520** and the third adhesive member **530** is completed, a hole adhesive member **540** may be disposed in the hole **611** of the filter **610** to block the hole 611.

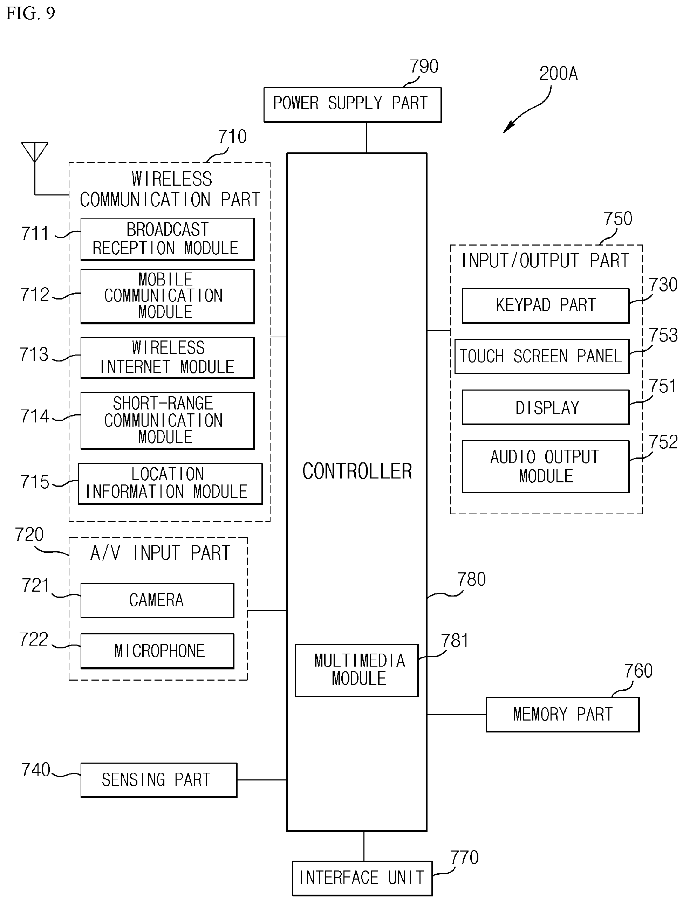

FIG. 8 is a perspective view of a portable terminal **200A** according to an embodiment, and FIG. 9 is a configuration diagram of the portable terminal **200A** illustrated in FIG. 8.

Referring to FIG. 8 and FIG. 9, a portable terminal **200A,** hereinafter referred to as a "terminal", may comprise: a body **850;** a wireless communication unit **710;** an A/V input unit **720;** a sensing unit **740;** an input/output unit **750;** a memory unit **760;** an interface unit **770;** a control unit **780;** and a power supply unit **790.**

The body **850** illustrated in FIG. 8 is in the form of a bar, but is not limited thereto, and may be of various structures such as slide type, folder type, swing type, swivel type, and the like in which two or more sub-bodies are coupled to be relatively movable.

The body **850** may include a case (casing, housing, cover, and the like) forming an outer appearance. For example, the body **850** may be divided into a front case **851** and a rear case **852.** Various electronic components of the terminal may be built into the space formed between the front case **851** and the rear case **852.**

The wireless communication unit **710** may include one or more modules enabling wireless communication between the terminal **200A** and a wireless communication system or between the terminal **200A** and a network in which the terminal **200A** is located. For example, the wireless communication unit **710** can be configured to include a broadcast reception module **711,** a mobile communication module **712,** a wireless Internet module **713,** a short-range communication module **714,** and a location information module **715.**

The A/V input unit **720** is for audio signal or video signal input, and may include a camera **721,** a microphone **722,** and the like.

The camera **721** may include a camera device **200** according to an embodiment.

The sensing unit **740** may generate a sensing signal for controlling the operation of the terminal **200A** by detecting the current state of the terminal **200A,** such as the open/closed state of the terminal **200A,** the location of the terminal **200A,** whether or not there is a user contact, the direction of the terminal **200A,** and the acceleration/deceleration of the terminal **200A.** For example, when the terminal **200A** is in the form of a slide phone, whether the slide phone is opened or closed may be detected. In addition, it is responsible for sensing functions related to whether or not power is supplied to the power supply unit **790,** and whether or not the interface unit **770** is connected to an external device.

The input/output unit **750** is for generating an input or output related to visual, auditory, or tactile sense. The input/output unit **750** may generate input data for controlling the operation of the terminal **200A** and, in addition, may display information processed by the terminal **200A.**

The input/output unit **750** may include a keypad unit **730,** a display module **751,** a sound output module **752,** and a touch screen panel **753.** The keypad unit **730** may generate input data by keypad input.

The display module **751** may include a plurality of pixels whose color changes according to an electrical signal. For example, the display module **751** may include at least one among a liquid crystal display, a thin film transistor liquid crystal display, an organic light emitting diode, a flexible display, and a 3D display.

The audio output module **752** outputs audio data received from the wireless communication unit **710** in a call signal reception mode, a call mode, a recording mode, a voice recognition mode, or a broadcast reception mode, or may output audio data stored in the memory unit **760.**

The touch screen panel **753** may convert a change in capacitance generated due to a user's touch on a specific area of the touch screen into an electrical input signal.

The memory unit **760** may store programs for processing and controlling the control unit **780,** and may temporarily store an input/output data (for example, phone book, message, audio, still image, photo, video, and the like). For example, the memory unit **760** may store an image photographed by the camera **721,** for example, a photo or video.

The interface unit **770** serves as a passage through which an external device connected to the terminal **200A** is connected. The interface unit **770** receives data from an external device or receives power and transmits it to each component inside the terminal **200A,** or transmits data inside the terminal **200A** to an external device. For example, the interface unit **770** includes a wired/wireless headset port, an external charger port, a wired/wireless data port, a memory card port, a port connecting a device having an identification module, an audio input/output (I/O) port, a video input/output (I/O) port, an earphone port, and the like.

The control unit **780** may control overall operations of the terminal **200A.** For example, the control unit **780** may perform related control and processing for voice calls, data communications, video calls, and the like.

The control unit **780** may include a multimedia module **781** for playing multimedia. The multimedia module **781** may be implemented inside the control unit **780** or may be implemented separately from the control unit **780.**

The control unit **780** may perform pattern recognition processing capable of recognizing a handwriting input or a drawing input performed on the touch screen as a character and an image, respectively.

The power supply unit **790** may receive external power or internal power under the control of the control unit **780** to supply power required for operation of each component.

Those skilled in the art related to the present embodiment will understand that the above-described description can be implemented in a modified form without departing from the essential characteristics thereof. Therefore, the disclosed methods should be considered from an illustrative rather than a restrictive perspective. The scope of the present invention is indicated by the claims, not the above description, and all differences within the scope equivalent thereto should be interpreted as being included in the present invention.

## Claims

1. A camera module comprising:
a substrate;
an image sensor being disposed on the substrate;
a plate being disposed on the substrate;
a base being disposed on the plate;
a lens barrel being disposed on the base;
a filter being disposed on the plate;
a first adhesive member being disposed between the plate and the base;
a second adhesive member being disposed between the filter and the plate; and
a third adhesive member being disposed on the edge of the filter,
wherein the third adhesive member is being disposed to encompass an upper surface and an outer side surface of the edge of the filter.

2. The camera module according to claim 1,
wherein the third adhesive member overlaps the filter and the second adhesive member in an optical axis direction.

3. The camera module according to claim 1,
wherein the third adhesive member is disposed to encompass an outer side surface of the second adhesive member, and
wherein the filter is disposed between the second adhesive member and the third adhesive member.

4. The camera module according to claim 1,
wherein the shrinkage rate of the second adhesive member is smaller than the shrinkage rate of the third adhesive member.

5. The camera module according to claim 1,
wherein the filter comprises a hole, and
wherein a hole adhesive member is disposed in the hole of the filter.

6. The camera module according to claim 1,
wherein the plate comprises an opening through which the image sensor passes, a first area in which the first adhesive member is disposed, and a second area in which the second adhesive member is disposed, and
wherein the first area and the second area are disposed to be spaced apart from each other.

7. The camera module according to claim 6,
wherein the plate comprises a third region connecting the first area and the second area, and
wherein the opening is formed to be larger than the image sensor.

8. The camera module according to claim 6,
wherein the first area of the plate is formed to correspond to a lower surface of the base, and
wherein the second area of the plate is formed to correspond to an edge of the filter.

9. The camera module according to claim 6,
wherein the base comprises an opening through which the lens barrel passes and an accommodating portion for accommodating the filter therein, and
wherein the filter is disposed to be spaced apart inside the accommodating portion of the base.

10. A camera module comprising:
a substrate; an image sensor being disposed on the substrate;
a plate being disposed on the substrate;
a lens driving device comprising a base being disposed on the plate, a housing being disposed on the base, and a bobbin being disposed inside the housing and movable in an optical axis direction;
a lens barrel being disposed inside the bobbin; and
a filter being disposed on the plate,
wherein the plate comprises a first area corresponding to a lower surface of the base and a second area corresponding to an edge of the filter, and
wherein the filter is fixed to the plate by two adhesive members having different shrinkage rates.
